Europäisches Patentamt

European Patent Office

Office européen des brevets

(19)

(11) Numéro de publication: **0 099 314**
**B1**

(12) **FASCICULE DE BREVET EUROPÉEN**

(45) Date de publication du fascicule du brevet:
**06.12.89**

(21) Numéro de dépôt: **83440033.5**

(22) Date de dépôt: **15.06.83**

(51) Int. Cl.⁴: **A 01 D 34/66,** A 01 D 75/18

(54) Dispositif empêchant l'accumulation de terre au carter d'une faucheuse à disques.

(30) Priorité: **09.07.82 FR 8212234**

(43) Date de publication de la demande:
**25.01.84 Bulletin 84/4**

(45) Mention de la délivrance du brevet:
**06.12.89 Bulletin 89/49**

(84) Etats contractants désignés:
**AT DE GB IT NL**

(56) Documents cité:
**EP-A-0 064 293**
**FR-A-2 077 995**
**FR-A-2 268 452**
**FR-A-2 377 755**
**FR-A-2 415 953**
**GB-A-2 002 622**
**GB-A-2 089 637**
**US-A-2 267 944**
**US-A-3 513 648**

(73) Titulaire: **KUHN S.A., 4, Impasse des Fabriques,
F-67700 Saverne (FR)**

(72) Inventeur: **Willinger, Joseph, 4, Rue des Acacias
Neuwiller- les- Saverne, F-67330 Bouxwiller (FR)**

EP 0 099 314 B1

LIBER, STOCKHOLM 1989

2

## Description

La présente invention concerne un dispositif qui empêche les accumulations de terre à la partie frontale du carter d'une faucheuse à disques supportant des organes de transmission de mouvement en vue de l'entraînement par le bas d'au moins un des disques situés au-dessus dudit carter et guidés en rotation dans celui-ci, lesdits disques étant chacun muni d'au moins un outil de coupe, ledit dispositif s'étendant au moins partiellement à la partie frontale du carter dans une zone située entre deux disques voisins.

Le grand inconvénient d'une faucheuse à disques est qu'en terrains humides ou dont la terre est relativement collante il se produit à la partie frontale du carter de celle-ci et notamment aux endroits situés entre deux disques voisins, des accumulations constituées d'un mélange de terre et de fines brindilles de fourrage coupé. Si ces accumulations s'étendent vers l'avant au-delà du point d'intersection des trajectoires extrêmes des outils de coupe, ces derniers ne peuvent plus couper le fourrage qui se présente en ces endroits de telle sorte qu'il subsiste dans le champ des traînées de fourrage non coupé qui, si elles sont nombreuses, représentent une perte de fourrage conséquente. Pour diminuer ces pertes et éviter un bourrage total de la barre de coupe, il faudra donc s'arrêter assez fréquemment pour décoller lesdites accumulations, ce qui ralentit considérablement le travail.

Par ailleurs, ces traînées créent des problèmes lors des travaux ultérieurs. En effet, lors du fanage, le fourrage coupé qui séjourne dans le voisinage desdites traînées, ne peut pas être correctement retourné par la faneuse de sorte que celui-ci sera encore humide lors du ramassage, ce qui est préjudiciable pour sa bonne conservation. Par ailleurs, lors de l'andainage, une partie du fourrage sec raclé par l'andaineuse restera accrochée aux brins non coupés. Un phénomène similaire se produira lors du ramassage de l'andain si celui-ci se trouve au-dessus d'une traînée non coupée car le "pick-up" de la machine de ramassage ne pourra pas ramasser la totalité du fourrage de sorte que le volume de pertes sera encore augmenté.

De plus, lors d'une coupe ultérieure, on retrouvera ce vieux fourrage déjà à moitié pourri dans le fourrage neuf qui a repoussé aux endroits qui ont été normalement coupés lors de la coupe précédente, ce qui diminue substantiellement la qualité de cette seconde récolte.

Dans la GB-A-2 089 637, on connaît une faucheuse à disques qui comporte à la partie frontale du carter entre deux disques voisins des racleurs qui sont fixés rigidement sur une plaque rigide couvrant toute la partie inférieure du carter de la barre de coupe et elle-même fixée rigidement audit carter. La pratique a montré que si ces racleurs freinaient quelque peu les accumulations de terre, ils ne peuvent pas les empêcher.

La présente invention permet de remédier à cet inconvénient dans la mesure où le dispositif empêchant les accumulations de terre au carter d'une faucheuse telle que décrite dans l'introduction comporte des moyens de suspension lui permettant d'avoir au moins deux degrés de liberté par rapport au carter.

Avec un tel dispositif le phénomène d'accumulation de terre et de fines brindilles de fourrage coupé ne peut plus se produire ou du moins s'il arrive à s'amorcer, il ne pourra pas progresser au-delà du bord frontal dudit dispositif. En effet, aux vibrations continuelles engendrées par la rotation des disques, auxquelles est soumis ledit dispositif, s'ajoutent les déplacements forcés qu'engendrent les protubérances que comporte le sol sur lequel glisse le carter de la faucheuse pendant le travail.

Lorsque ledit dispositif rencontre une telle protubérance, celle-ci va l'écarter de manière importante de sa position normale suivant ses degrés de liberté de sorte que, si une accumulation de terre avait commencé à se former, le déplacement relatif du dispositif par rapport au carter la décollera. Compte tenu des nombreuses protubérances que comporte le sol, il résulte que la partie frontale du carter est toujours propre aux endroits critiques. De plus, en bout de champ lorsque la faucheuse est relevée, les vibrations dudit dispositif vont continuer cette action de décrottage de ladite partie frontale du carter.

Selon une réalisation préférée du dispositif de décrottage selon l'invention, les moyens de suspension de celui-ci lui permettent d'avoir élastiquement au moins deux degrés de liberté par rapport au carter. Ce mode préférentiel de réalisation de l'invention permet d'accroître substantiellement le pouvoir de décrottage dudit dispositif car dès que le dispositif de décrottage est écarté de sa position normale, les moyens de suspension emmagasinent une certaine quantité d'énergie qu'ils sont capables de restituer dès que l'obstacle est franchi. Ainsi un déplacement forcé dudit dispositif dans un sens entraîne automatiquement un déplacement forcé en sens contraire dès que l'obstacle est franchi.

Selon une caractéristique supplémentaire de l'invention, les deux degrés de liberté que comporte le dispositif de décrottage et notamment son bord frontal, sont respectivement un mouvement sensiblement vertical et un mouvement transversal par rapport au sens d'avancement de la machine. Pour ce faire il existe un certain jeu vertical et un certain jeu dans le sens d'avancement de la machine entre le carter et le dispositif de décrottage, lorsque ledit dispositif est dans sa position de repos. Par ailleurs, lorsque la partie frontale du carter est munie de moyens qui protègent les disques, il devra exister un certain jeu latéral entre le dispositif de décrottage et lesdits moyens, pour que le mouvement transversal puisse se réaliser. En pratique, il s'est avéré que l'amplitude du mouvement transversal peut être inférieure à celle du mouvement sensiblement vertical, ce qui implique que la valeur du jeu latéral à prévoir pourra être inférieure à celle du jeu vertical. Un des grands avantages du mouvement transversal est d'éviter que de la terre ne s'accumule entre le carter et le dispositif de décrottage, et ne bloque le mouvement vertical dudit dispositif.

Selon une caractéristique supplémentaire de l'invention des organes limitent le mouvement sensiblement vertical du dispositif de décrottage vers le haut de sorte que, dans la position la plus haute, le dispositif de décrottage reste en-dessous du plan de coupe. On évite ainsi un endommagement dudit dispositif par les outils de coupe.

D'autres caractéristiques et avantages de l'invention apparaîtront dans la description suivante nullement limitative d'une forme de réalisation de l'invention, en référence au dessin annexé sur lequel:

- La figure 1 représente une vue de dessus de la barre de coupe d'une faucheuse à disques, équipée d'un exemple de réalisation d'un dispositif de décrottage selon l'invention,
- La figure 2 représente une vue latérale en coupe de la barre de coupe de la figure 1 qui ne repose pas sur le sol, suivant le plan vertical V – V défini sur ladite figure 1,
- La figure 3 représente une vue latérale en coupe de la barre de coupe de la figure 1 qui repose sur le sol (position de travail), suivant le plan vertical V – V défini sur ladite figure 1,
- La figure 4 représente une vue en perspective du dispositif de décrottage démonté qui équipe la barre de coupe des figures 1, 2 et 3,
- La figure 5 représente une vue de dessous de la barre de coupe équipée d'un carter vissé et montre le mode de montage du dispositif de décrottage sur ledit carter vissé,
- La figure 6 représente une vue de dessous de la barre de coupe équipée d'un carter soudé et montre le mode de montage d'une variante de réalisation du dispositif de décrottage sur ledit carter soudé,
- La figure 7 représente une section du dispositif de décrottage suivant la ligne VII – VII de la figure 4.

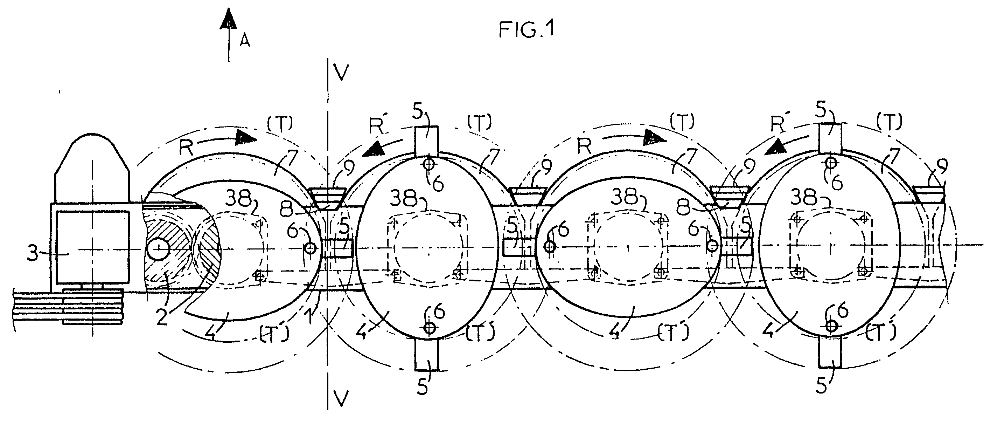

Sur la figure 1, on voit la barre de coupe d'une faucheuse à disques. Cette barre de coupe comprend un carter (1) dans lequel est logée une série de roues dentées (2) entraînées en rotation à partir de la prise de force d'un tracteur non représenté, par un mécanisme (3) connu tel que carter de renvoi, poulies et courroies par exemple. Les roues dentées (2) entraînent en rotation des disques (4) munis chacun de deux couteaux (5) diamétralement opposés pouvant tourner librement autour d'axes (6) aménagés dans les disques (4). Les couteaux (5) sont maintenus dans leur position de travail sous l'effet de la force centrifuge et décrivent de ce fait des trajectoires circulaires (T) lorsque les disques (4) sont entraînés en rotation. A l'avant du carter (1) vu dans le sens d'avancement (A) de la faucheuse, s'étendent, sensiblement sous chaque disque (4), des secteurs circulaires (7) qui ont un rayon légèrement plus grand que le rayon des trajectoires (T') des disques (4) mais plus petit que le rayon des trajectoires (T) des couteaux (5). De ce fait, les disques (4) sont protégés contre tout obstacle qui se trouve sur le sol sur lequel opère la faucheuse. Seuls les couteaux (5) ne sont pas protégés, mais comme ceux-ci sont montés librement tournant sur les disques (4), ils peuvent se ranger sous lesdits disques (4) lorsqu'ils heurtent un obstacle, puis reprendre leur position de travail dès que l'obstacle est franchi.

A l'avant du carter (1), entre le premier et le deuxième disque et entre le troisième et le quatrième disque, endroits où les couteaux (5) des disques (4) convergent pendant leur rotation vers le carter (1), sont aménagés des organes de protection (8) dont la fonction est de protéger le carter lors du choc dû à un couteau (5) éventuellement plié lors de l'interférence avec un obstacle.

Dans les zones situées entre deux disques (4) voisins s'étendent des dispositifs de décrottage (9) qui peuvent se déplacer sensiblement perpendiculairement par rapport au plan de la figure 1 et latéralement par rapport au sens d'avancement (A) de la faucheuse. Ce mouvement relatif par rapport au carter (1) empêche les accumulations de terre qui peuvent se former en ces endroits et qui gênent le bon déroulement de l'opération de fauchage.

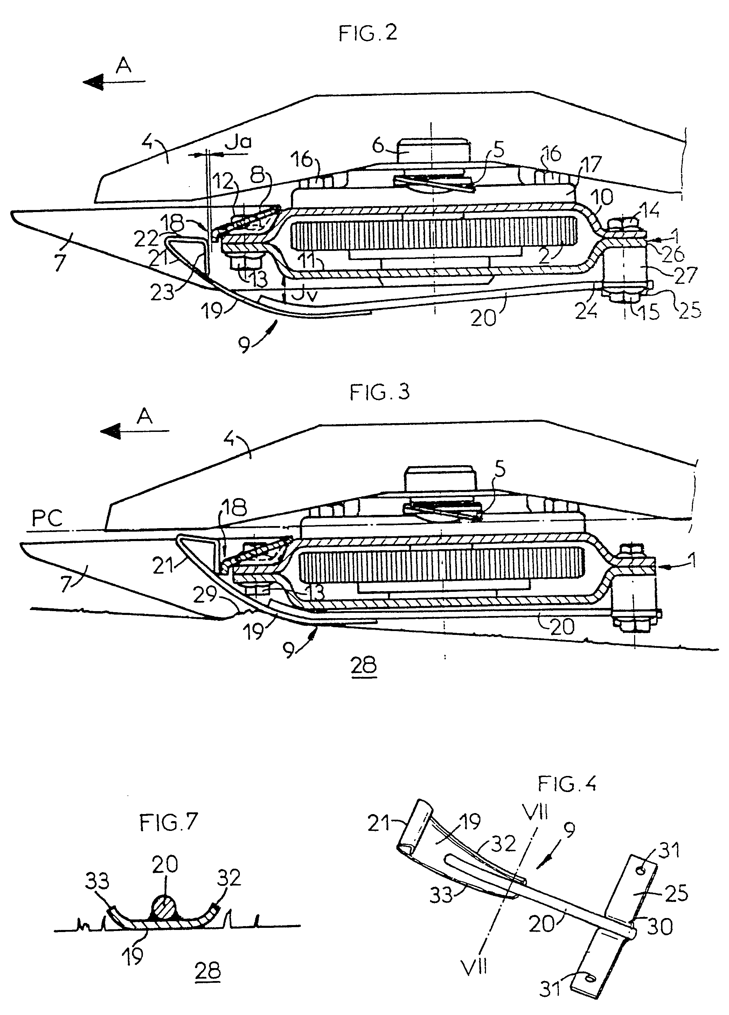

Sur la figure 2, on voit que le carter (1) de la barre de coupe est formé par deux tôles pliées (10, 11) assemblées entre elles par des vis et écrous (12, 13, 14, 15) qui traversent leurs bords extérieurs, de manière à former un espace intérieur dans lequel sont logées les roues dentées (2). Il est également possible que le carter (1) soit formé par une seule tôle pliée et une tôle plate assemblées entre elles d'une manière identique à celle décrite ci-dessus. Sur la tôle supérieure (10) du carter (1) sont fixés à l'aide de vis (16) des paliers de disques (17) dans lesquels sont guidés en rotation les axes non représentés des disques (4). A la partie frontale (18) du carter (1) s'étendent les organes de protection (8) et les secteurs circulaires (7). Sous la tôle inférieure (11), le carter (1) est muni de dispositifs de décrottage (9) dont la partie avant est formée par une plaque (19) en forme de ski, de manière à ce qu'elle puisse facilement glisser sur le sol, reliée au carter (1) par l'intermédiaire d'une tige flexible (20) en acier à ressort qui permet à la plaque (19) de se déplacer au moins dans un sens sensiblement vertical et dans un sens transversal par rapport à l'avancement (A) de la faucheuse. La plaque (19) est encore susceptible de tourner légèrement autour de l'axe longitudinal de la tige flexible (20) qui possède avantageusement une section ronde.

Le bord frontal (21) de la plaque (19) comporte une partie sensiblement horizontale (22), laquelle se termine par une partie dirigée vers le bas (23) qui s'étend avantageusement jusqu'à la plaque (19) et est avantageusement fixée à celle-ci par des moyens de fixation connus tels que brasage par exemple. Avec une telle forme, le bord frontal (21) de la plaque (19) est correctement renforcé de manière simple et facilement réalisable, contre les chocs qu'il est appelé encaisser lors du travail de la faucheuse. La partie arrière (24) de la tige flexible (20) est reliée à une bride (25) dont la forme sera mieux visible sur la figure 4 qui sera décrite ultérieurement. Cette bride (25) est vissée au bord arrière (26) du carter (1) à l'aide d'au moins un ensemble vis-écrou (14, 15) après interposition d'au moins une entretoise (27) également traversée par la ou les vis (14). De ce fait, les vis (14) sont avantageusement plus longues que les vis (12). Dans la position de repos du dispositif de décrottage (9), il existe un certain jeu vertical (Jv) de même qu'un certain jeu (Ja) dans le sens d'avancement de la faucheuse entre le carter (1) et le dispositif de décrottage (9). Le diamètre de la section ronde de la tige flexible (20) est avantageusement compris environ entre 4 et 10 millimètres. Cette fourchette de valeurs dudit diamètre représente le meilleur compromis entre résistance mécanique de la tige flexible (20) et insensibilité aux bourrages. Par insensibilité de la tige flexible (20) aux bourrages, il faut entendre que si une accumulation de terre se produit entre le carter (1) et ladite tige flexible (20), cette dernière pourra aisément, du fait de son diamètre relativement réduit, s'enfoncer dans ladite accumulation de terre de sorte que le mouvement sensiblement vertical du dispositif de décrottage (9) n'est pas bloqué.

Sur la figure 3, la barre de coupe repose sur le sol (28) par l'intermédiaire de secteurs circulaires (7) qui se prolongent sous le carter (1) en formant des patins non représentés. Pendant le travail, la barre de coupe possède un certain piquage vers l'avant pour que les couteaux (5) puissent couper le fourrage relativement près du sol. Lorsque la barre de coupe repose sur un sol plat, il est avantageux que la tige flexible (20) soit déformée d'une certaine valeur vers le haut pour que le dispositif de décrottage (9) repose avec une certaine pression initiale sur le sol (28).

Lorsque la faucheuse est mise en mouvement dans le sens de la flèche (A), les vibrations engendrées principalement par la rotation des disques (4), font vibrer avec une certaine amplitude le dispositif de décrottage (9) suivant ses différents degrés de liberté. Lorsqu'une protubérance (29) se présente à l'endroit où glisse la plaque (19), celle-ci sera contrainte à se déplacer vers le haut et/ou à droite ou à gauche selon que ladite protubérance (29) touche la plaque (19) à droite ou à gauche. Si une accumulation de terre s'est formée à la partie frontale (18) du carter (1), celle-ci est soulevée et peut arriver dans la zone d'action des couteaux (5), c'est-à-dire au-dessus du plan de coupe (PC) de telle sorte que les couteaux (5) peuvent frapper cette accumulation et la disloquer en l'éparpillant derrière le carter (1). Si l'accumulation de terre n'arrive pas jusqu'au plan de coupe (PC), ce sont les vibrations dont est animée la plaque (19) qui peuvent décoller ladite accumulation du bord frontal (21) de ladite plaque (19). Le mouvement transversal dont est animée la plaque (19) quand elle rencontre une protubérance (29) est très avantageux dans la mesure où la terre qui arrive à se loger dans l'espace situé entre la plaque (19) et le carter (1) sensiblement à l'endroit où on voit l'écrou (13), est à nouveau forcée de se dégager latéralement. Cette action de dégagement latéral de la terre est amplifiée grâce à l'action de poussée que peut exercer la partie frontale de la tige flexible (20) lors de son déplacement latéral avec la plaque (19) sur laquelle elle est fixée. Il est évident, du fait que la plaque (19) repose avec une certaine pression initiale sur le sol (28), que lorsque ladite plaque (19) passe au-dessus d'un trou, elle se déplace vers le bas et éventuellement transversalement par rapport au sens (A), ce qui contribue également au décollage des accumulations à la partie frontale (18) du carter (1) et au dégagement latéral de la terre logée entre le carter (1) et la plaque (19). Par ailleurs, lorsque les moyens de suspension tels que la tige flexible (20) autorisent une légère rotation autour d'un axe dirigé sensiblement dans le sens d'avancement de la faucheuse, ce mouvement contribue également avantageusement au décollage des accumulations de terre.

En effet, lorsque la plaque (19) tourne autour d'un axe sensiblement dirigé dans le sens d'avancement (A), le bord de la plaque (19) qui est en contact avec le sol, permet de décoller l'accumulation de terre le long de la ligne de jonction de ladite accumulation avec un des secteurs circulaires (7).

Sur la figure 3, on voit également que le déplacement vers le haut de la plaque (19) est limité. Cette limitation est par exemple réalisée dans le cas de la figure 3, par la partie frontale de la tige flexible (20) qui bute contre le dessous du carter (1) mais peut être réalisée par d'autres moyens. Ainsi lorsque la plaque (19) rencontre une protubérance (29) trop haute, le bord frontal (21) de ladite plaque (19) reste toujours en dessous du plan de coupe (PC) et on ne risque donc aucune interférence avec les couteaux (5).

Sur la figure 4, on voit de manière plus précise la forme de la bride (25). Celle-ci comporte dans sa partie centrale un décrochement sensiblement circulaire (30) dans lequel vient se loger l'extrémité arrière de la tige flexible (20) qui y est fixée par brasage par exemple.

Le dessus de la tige flexible (20) est sensiblement au niveau de la face supérieure de la bride (25) mais avantageusement légèrement plus haut que ladite face supérieure pour que, lors du serrage des vis et écrous (14, 15), le dessus de la tige flexible (20) soit bien pressé contre l'entretoise (27).

On voit également que la bride (25) comporte deux trous (31) par lesquels passent les vis (14).

De plus, les bords latéraux (32, 33) de la plaque (19) sensiblement dirigés dans le sens d'avancement (A) de la faucheuse, sont recourbés vers le haut tel que visible sur la figure 7. Ainsi, la plaque (19) peut mieux glisser sur les pierres qui se trouvent sur le sol (28).

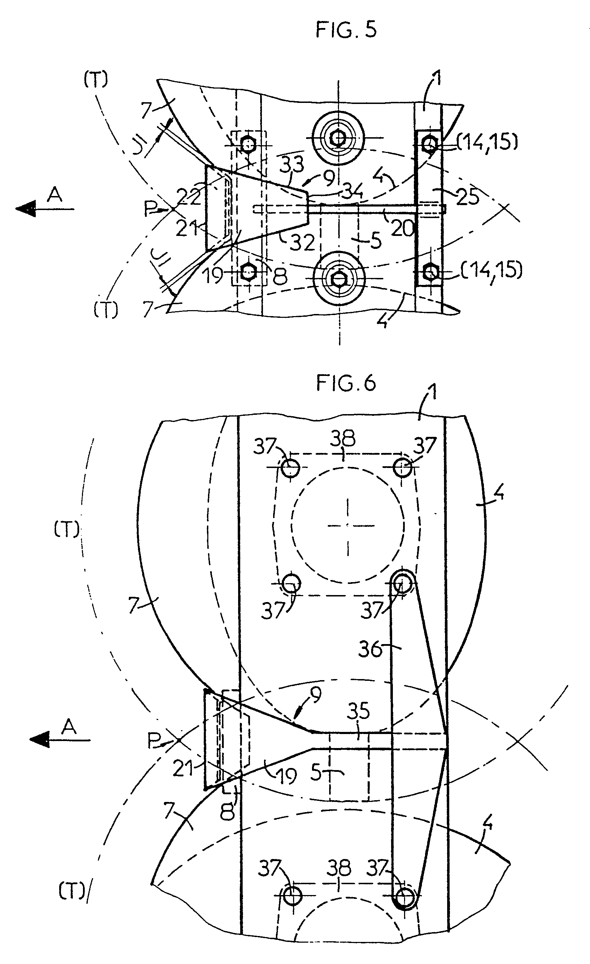

Sur la figure 5, on voit le dessous du carter (1) et le montage du dispositif de décrottage (9) décrit plus haut. La dimension de la plaque (19) est telle que son bord frontal (21) ne s'étende pas au-delà du point d'intersection (P) des trajectoires extrêmes (T) que décrivent les couteaux (5) pendant leur rotation. Entre la partie sensiblement horizontale (22) de la plaque (19) et les deux secteurs circulaires (7), il existe de part et d'autre, un certain jeu latéral (Jl) de sorte que le mouvement transversal et éventuellement, si elle existe, la rotation autour d'un axe dirigé sensiblement dans le sens d'avancement (A), puissent se réaliser. La pratique a montré que le jeu latéral (Jl) peut être inférieur au jeu vertical (Jv), c'est-à-dire que l'amplitude du mouvement transversal peut être inférieure à celle du mouvement sensiblement vertical. Par ailleurs, les bords latéraux (32, 33) de la plaque (19) sont avantageusement convergents dans le sens contraire de la flèche (A), c'est-à-dire que la largeur de la plaque (19) diminue depuis son bord frontal (21) jusqu'à son bord arrière (34). Avec une telle forme on évite que la terre et les fines brindilles de fourrage ne viennent se coller à la partie arrière des bords latéraux (32, 33) au voisinage du bord arrière (34). En effet, lorsque la plaque (19) passe sur une taupinière, elle va y creuser une tranchée dont la largeur est sensiblement égale à la largeur de son bord frontal (21) de telle sorte que les bords latéraux (32, 33) de ladite plaque (19) puissent passer dans cette tranchée sans toucher les bords de celle-ci, et la terre ne risque donc pas de se coller auxdits bords latéraux (32, 33).

La figure 6 représente une variante de réalisation du dispositif de décrottage (9). Ce dispositif ne comporte plus de tige flexible (20) comme dans l'exemple précédent mais les moyens de suspension sont réalisés par la plaque (19) elle-même qui est formée de telle façon que sa partie arrière est constituée par un manche (35) de largeur sensiblement constante et qui est fixé à l'arrière sur une plaquette (36). Il est évident que la forme du manche (35) peut être quelconque. Sa section peut en particulier être sensiblement ronde et avoisiner celle de la tige flexible (20) de l'exemple précédent. La plaquette (36) comporte deux trous chacun traversé par l'une des vis (37) qui servent à fixer les paliers de disques (38) sur le carter soudé (1). La partie avant de la plaque (19) reste sensiblement identique à celle de l'exemple précédent. Cette plaque (19) pourra être rendue plus rigide. Pour ce faire, on pourra avantageusement la doter d'une nervure qui pourra s'étendre sensiblement le long de son axe longitudinal. Une telle nervure pourra être réalisée par emboutissage par exemple et au moins une partie de celle-ci pourra avoir une forme qui sera partiellement semblable à la forme du manche (35). Avantageusement, la nervure et le manche (35) pourront se raccorder l'un à l'autre. Ce mode de réalisation des moyens de suspension autorise à la plaque (19) principalement un mouvement sensiblement vertical et un mouvement de rotation autour d'un axe sensiblement dirigé dans le sens d'avancement (A) de la faucheuse.

Ce mouvement de rotation empêchera entre autres l'accumulation de terre entre le carter (1) et la plaque (19).

## Revendications

1. Dispositif (9) empêchant l'accumulation de terre à la partie frontale du carter (1) d'une faucheuse à disques (4) supportant des organes (2) de transmission de mouvement en vue de l'entraînement par le bas d'au moins un des disques (4) situés au-dessus dudit carter (1) et guidés en rotation dans celui-ci, lesdits disques (4) étant chacun muni d'au moins un outil de coupe (5), ledit dispositif (9) s'étendant au moins partiellement à la partie frontale du carter (1) dans une zone située entre deux disques (4) voisins, caractérisé par le fait que ledit dispositif (9) comporte des moyens de suspension (20, 35) lui permettant d'avoir au moins deux degrés de liberté par rapport au carter (1).

2. Dispositif selon la revendication 1, caractérisé par le fait que ce dispositif (9) comporte des moyens de suspension (20, 35) lui permettant d'avoir élastiquement au moins deux degrés de liberté par rapport au carter (1).

3. Dispositif selon l'une au moins des revendications 1 ou 2, caractérisé par le fait que les moyens de suspension (20, 35) autorisent audit dispositif (9) et notamment à son bord frontal (21), un mouvement sensiblement vertical et un mouvement transversal par rapport au sens d'avance (A) de la faucheuse.

4. Dispositif selon l'une au moins des revendications 1, 2 ou 3, caractérisé par le fait que les moyens de suspension (20, 35) autorisent audit dispositif (9) et notamment à son bord frontal (21), un mouvement sensiblement vertical et une rotation autour d'un axe sensiblement dirigé dans le sens d'avance (A) de la faucheuse.

5. Dispositif selon l'une au moins des revendications 3 ou 4, caractérisé par le fait qu'en position de repos, il existe un certain jeu vertical (Jv) et un certain jeu (Ja) dans le sens d'avance (A) de la faucheuse entre le carter (1) et ledit dispositif (9).

6. Dispositif selon la revendication 5, caractérisé par le fait que la valeur du jeu vertical (Jv) est supérieure à celle du jeu (Ja).

7. Dispositif selon l'une au moins des revendications 5 ou 6, caractérisé par le fait que le carter (1) comporte à l'avant un certain nombre de moyens (7) qui protègent les disques (4), et qu'il existe un certain jeu latéral (Jl) entre ledit dispositif (9) et lesdits moyens (7) situés de part et d'autre de ce dispositif (9).

8. Dispositif selon la revendication 7, caractérisé par le fait que la valeur du jeu latéral (Jl) est inférieure à celle du jeu vertical (Jv).

9. Dispositif selon l'une au moins des revendications 3, 4, 5, 6, 7 ou 8, caractérisé par le fait que des moyens limitent vers le haut le mouvement sensiblement vertical du dispositif (9).

10. Dispositif selon l'une au moins des revendications précédentes, caractérisé par le fait qu'au moins la partie avant dudit dispositif (9) est constituée par une plaque (19) qui a sensiblement la forme d'un ski.

11. Dispositif selon la revendication 10, caractérisé par le fait que la largeur de la plaque (19) n'est pas constante sur toute sa longueur.

12. Dispositif selon la revendication 11, caractérisé par le fait qu'au moins la largeur de la partie avant de la plaque (19) diminue, son bord frontal (21) étant le plus large.

13. Dispositif selon l'une au moins des revendications 10, 11 ou 12, caractérisé par le fait que le bord frontal (21) de la plaque (19) comporte une partie sensiblement horizontale (22).

14. Dispositif selon la revendication 13, caractérisé par le fait que la partie sensiblement horizontale (22) se termine par une partie (23) dirigée vers le bas.

15. Dispositif selon la revendication 14, caractérisé par le fait que la partie (23) dirigée vers le bas, s'étend sensiblement jusqu'au niveau du reste de la plaque (19).

16. Dispositif selon la revendication 15, caractérisé par le fait que la partie (23) dirigée vers le bas est fixée au reste de la plaque (19) par des moyens de fixation tels que brasage par exemple.

17. Dispositif selon l'une au moins des revendications 10 à 16, caractérisé par le fait que les bords latéraux (32, 33) de la plaque (19) sensiblement dirigés dans le sens d'avance (A) de la faucheuse sont recourbés vers le haut.

18. Dispositif selon l'une au moins des revendications précédentes, caractérisé par le fait que les moyens de suspension (20, 35) sont sensiblement fixés au bord arrière (26) du carter (1).

19. Dispositif selon la revendication 18, caractérisé par le fait que le carter (1) est formé par deux tôles (10, 11) dont l'une au moins est pliée et qui sont assemblées entre elles par des vis (12, 14) traversant leurs bords, et que la fixation des moyens de suspension (20, 35) se fait au moyen d'au moins une desdites vis (14) traversant le bord arrière (26) du carter (1).

20. Dispositif selon la revendication 18, caractérisé par le fait que le carter (1) est formé par deux tôles dont l'une au moins est pliée et qui sont assemblées entre elles par soudure, des paliers (38), guidant en rotation les disques (4), étant fixés audit carter (1) par des vis (37) traversant celui-ci, et que la fixation des moyens de suspension (20, 35) se fait au moyen d'au moins une desdites vis (37) servant à fixer un palier (38) au carter (1).

21. Dispositif selon l'une au moins des revendications 10 à 20, caractérisé par le fait que les moyens de suspension comportent notamment une tige flexible (20) en acier à ressort.

22. Dispositif selon l'une au moins des revendications 10 à 20, caractérisé par le fait que les moyens de suspension sont constitués par une partie de la plaque (19) en forme de manche (35).

23. Dispositif selon la revendication 22, caractérisé par le fait que la section du manche (35) est sensiblement ronde.

24. Dispositif selon l'une au moins des revendications 10 à 23, caractérisé par le fait que la plaque (19) comporte une nervure sensiblement le long de son axe longitudinal.

25. Dispositif selon les revendications 22 et 24 ou 23 et 24, caractérisé par le fait qu'une partie au moins de la nervure a une forme qui est partiellement semblable à celle du manche (35).

26. Dispositif selon la revendication 25, caractérisé par le fait que la nervure et le manche (35) se raccordent.

**Patentansprüche**

1. Vorrichtung (9) zum Verhindern von Erdanhäufung an der Vorderseite des Gehäuses (1) eines Mähers mit Scheiben (4), welches Bewegungsübertragungsorgane (2) zum Antrieb von unten wenigstens einer der oberhalb des Gehäuses (1) angeordneten und in diesem drehbar geführten Scheiben (4), wobei diese Scheiben (4) jeweils mit mindestens einem Schnittwerkzeug (5) versehen sind und sich die Vorrichtung (9) mindestens teilweise an der Vorderseite des Gehäuses (1) in einen Bereich zwischen zwei benachbarten Scheiben (4) erstreckt, dadurch gekennzeichnet, dass die Vorrichtung (9) Aufhängungsmittel (20, 35) aufweist, welche der Vorrichtung mindestens zwei Freiheitsgrade in bezug auf das Gehäuse (1) zulassen.

2. Vorrichtung nach Anspruch 1, dadurch gekennzeichnet, dass die Vorrichtung (9) Aufhängungsmittel (20, 35) aufweist, welche, mittels ihrer Elastizität, der Vorrichtung (9) mindestens zwei Freiheitsgrade in bezug auf das Gehäuse (1) zulassen.

3. Vorrichtung nach mindestens einem der Ansprüche 1 oder 2, dadurch gekennzeichnet, dass die Aufhängungsmittel (20, 35) der Vorrichtung (9) und insbesonders ihres vorderen Bereiches (21) eine im wesentlichen vertikale Bewegung und eine auf die Vorschubsrichtung (A) des Mähers bezogene Querbewegung ermöglichen.

4. Vorrichtung nach mindestens einem der Ansprüche 1, 2 oder 3, dadurch gekennzeichnet, dass die Aufhängungsmittel (20, 35) der Vorrichtung (9) und insbesonders ihres vorderen Bereiches (21) eine im wesentlichen vertikale Bewegung und ein Drehung um eine im wesentlichen in Vorschubrichtung (A) des Mähers gerichtete Achse ermöglichen.

5. Vorrichtung nach mindestens einem der Ansprüche 3 oder 4, dadurch gekennzeichnet, dass in Ruhestellung ein gewisses vertikales Spiel (Jv) und ein gewisses Spiel (Ja) in Vorschubrichtung (A) des Mähers zwischen dem Gehäuse (1) und der Vorrichtung (9) besteht.

6. Vorrichtung nach Anspruch 5, dadurch gekennzeichnet, dass die Grösse des vertikalen Spieles (Jv) grösser als jene des Spiels (Ja) ist.

7. Vorrichtung nach mindestens einem der Ansprüche 5 oder 6, dadurch gekennzeichnet, dass das Gehäuse (1) an seiner Vorderseite eine gewisse Anzahl von Mitteln (7) aufweist, welche die Scheiben (4) schützen und dass ein gewisses seitliches Spiel (Jl) zwischen der Vorrichtung (9) und den beiderseits der Vorrichtung (9) angeordneten Mitteln (7) besteht.

8. Vorrichtung nach Anspruch 7, dadurch gekennzeichnet, dass die Grösse des seitlichen Spiels (Jl) kleiner als jene des vertikalen Spiels (Jv) ist.

9. Vorrichtung nach mindestens einem der Ansprüche 3, 4, 5, 6, 7 oder 8, dadurch gekennzeichnet, dass Mittel die im wesentlichen vertikale Bewegung der Vorrichtung (9) nach oben hin beschränken.

10. Vorrichtung nach mindestens einem der vorhergehenden Ansprüche, dadurch gekennzeichnet, dass mindestens der vordere Teil der Vorrichtung (9) aus einer Platte (19) besteht, welche im wesentlichen die Form eines Skis hat.

11. Vorrichtung nach Anspruch 10, dadurch gekennzeichnet, dass die Breite der Platte (19) über ihre gesamte Länge nicht konstant ist.

12. Vorrichtung nach Anspruch 11, dadurch gekennzeichnet, dass mindestens die Breite des vorderen Teils der Platte (19) abnimmt, wobei ihr vorderer Bereich (21) die grösste Breite hat.

13. Vorrichtung nach mindestens einem der Ansprüche 10, 11 oder 12, dadurch gekennzeichnet, dass der vordere Bereich (21) der Platte (19) einen im wesentlichen horizontalen Teil (22) aufweist.

14. Vorrichtung nach Anspruch 13, dadurch gekennzeichnet, dass der im wesentlichen horizontale Teil (22) in einem nach unten gerichteten Teil (23) endet.

15. Vorrichtung nach Anspruch 14, dadurch gekennzeichnet, dass sich der nach unten gerichtete Teil (23) im wesentlichen bis auf das Niveau des übrigen Teils der Platte (19) erstreckt.

16. Vorrichtung nach Anspruch 15, dadurch gekennzeichnet, dass der nach unten gerichtete Teil (23) am übrigen Teil der Platte (19) durch Befestigungsmittel, beispielsweise Löten, befestigt ist.

17. Vorrichtung nach mindestens einem der Ansprüche 10 bis 16, dadurch gekennzeichnet, dass die im wesentlichen in Vorschubrichtung (A) des Mähers gerichteten seitlichen Ränder (32, 33) der Platte (19) aufwärts gebogen sind.

18. Vorrichtung nach mindestens einem der vorhergehenden Ansprüche, dadurch gekennzeichnet, dass die Aufhängungsmittel (20, 35) im wesentlichen am hinteren Randbereich (26) des Gehäuses (1) befestigt sind.

19. Vorrichtung nach Anspruch 18, dadurch gekennzeichnet, dass das Gehäuse (1) durch zwei Bleche (10, 11) gebildet ist, von denen mindestens eines gebogen ist und welche mittels ihre Randbereiche durchsetzende Schrauben (12, 14) miteinander verbunden sind, und dass die Befestigung der Aufhängungsmittel (20, 35) durch mindestens eine der den hinteren Randbereich des Gehäuses (1) durchsetzenden Schrauben (14) erfolgt.

20. Vorrichtung nach Anspruch 18, dadurch gekennzeichnet, dass das Gehäuse (1) aus zwei Blechen gebildet ist, von denen mindestens eines gebogen ist und welche miteinander durch Schweissen verbunden sind, wobei Lager (38), welche die rotierenden Scheiben (4) führen, an diesem Gehäuse (1) durch dieses durchsetzende Schrauben (37) befestigt sind, und dass die Befestigung der Aufhängungsmittel (20, 35) mittels mindestens einer der zur Befestigung eines Lagers (38) am Gehäuse (1) dienenden Schrauben (37) erfolgt.

21. Vorrichtung nach mindestens einem der Ansprüche 10 bis 20, dadurch gekennzeichnet, dass die Aufhängungsmittel insbesonders eine flexible Stange (20) aus Federstahl aufweisen.

22. Vorrichtung nach mindestens einem der Ansprüche 10 bis 20, dadurch gekennzeichnet, dass die Aufhängungsmittel aus einem Teil der Platte (19) in Form einer Stange (35) gebildet sind.

23. Vorrichtung nach Anspruch 22, dadurch gekennzeichnet, dass der Querschnitt der Stange (35) im wesentlichen rund ist.

24. Vorrichtung nach mindestens einem der Ansprüche 10 bis 23, dadurch gekennzeichnet, dass die Platte (19) im wesentlichen entlang ihrer Längsachse eine Rippe aufweist. .

25. Vorrichtung nach den Ansprüchen 22 und 24 oder 23 und 24, dadurch gekennzeichnet, dass mindestens ein Teil der Rippe eine Form hat, die teilweise derjenigen der Stange (35) gleicht.

26. Vorrichtung nach Anspruch 25, dadurch gekennzeichnet, dass die Rippe und die Stange (35) zusammenpassen.

Claims

1. A device (9) which, on a mower having discs (4), prevents the accumulation of soil on the front portion of the casing (1) which supports motion-transmitting members (2) for the purpose of driving from the bottom at least one of the discs (4) situated above the said casing (1) and guided in it in rotation, the said discs (4) being each equipped with at least one cutter tool (5), the said device (9) extending at least partially at the front portion of the casing (1) in a zone situated between two adjacent discs (4), characterized by the fact that the said device (9) has means of suspension (20, 35) enabling it to have at least two degrees of freedom with respect to the casing (1).

2. A device as in Claim 1, characterized by the fact that this device (9) has means of suspension (20, 35) enabling it to have elastically at least two degrees of freedom with respect to the casing (1).

3. A device as in at least one of the Claims 1 or 2, characterized by the fact that the means of suspension (20, 35) allow the said device (9) and in particular its front edge (21) a substantially vertical movement and a movement transversely with respect to the direction of advance (A) of the mower.

4. A device as in at least one of the Claims 1, 2 or 3, characterized by the fact that the means of suspension (20, 35) allow the said device (9) and in particular its front edge (21) a substantially vertical movement and a rotation about an axis directed substantially in the direction of advance (A) of the mower.

5. A device as in at least one of the Claims 3 or 4, characterized by the fact that in the position of rest there exists between the casing (1) and the said device (9) a certain vertical play (Jv) and in the direction of advance (A) of the mower a certain play (Ja).

6. A device as in Claim 5, characterized by the fact that the value of the vertical play (Jv) is greater than that of the play (Ja).

7. A device as in at least one of the Claims 5 or 6, characterized by the fact that the casing (1) has at the front a certain number of means (7) which protect the discs (4) and that there exists a certain lateral play (Jl) between the said device (9) and the said means (7) located on opposite sides of this device (9).

8. A device as in Claim 7, characterized by the fact that the value of the lateral play (Jl) is less than that of the vertical play (Jv).

9. A device as in at least one of the Claims 3, 4, 5, 6, 7 or 8, characterized by the fact that there are means which limit the substantially vertical movement of the device (9) in the upwards direction.

10. A device as in at least one of the preceding Claims, characterized by the fact that at least the front portion of the said device (9) consists of a plate (19) which has substantially the shape of a ski.

11. A device as in Claim 10, characterized by the fact that the width of the plate (19) is not constant along its whole length.

12. A device as in Claim 11, characterized by the fact that at least the width of the front portion of the plate (19) diminishes, its front edge (21) being the widest.

13. A device as in at least one of the Claims 10, 11 or 12, characterized by the fact that the front edge (21) of the plate (19) includes a substantially horizontal portion (22).

14. A device as in Claim 13, characterized by the fact that the substantially horizontal portion (22) ends in a portion (23) directed downwards.

15. A device as in Claim 14, characterized by the fact that the portion (23) directed downwards extends substantially down to the level of the rest of the plate (19).

16. A device as in Claim 15, characterized by the fact that the portion (23) directed downwards is attached to the rest of the plate (19) by means of attachment such, for example, as brazing.

17. A device as in at least one of the Claims 10 to 16, characterized by the fact that the side edges (32, 33) of the plate (19), which are directed substantially in the direction of advance (A) of the mower are curved upwards.

18. A device as in at least one of the preceding Claims, characterized by the fact that the means of suspension (20, 35) are substantially attached to the rear edge (26) of the casing (1).

19. A device as in Claim 18, characterized by the fact that the casing (1) is formed of two metal sheet (10, 11) of which at least one is folded and which are assembled together screws (12, 14) passing through their edges, and that the attachment of the means of suspension (20, 35) is effected by means of at least one of the said screw (14) passing through the rear edge (26) of the casing. (1).

20. A device as in Claim 19, characterized by the fact that the casing (1) is formed of two metal sheets (10, 11) of which at least one is folded and which are assembled together by welding, bearings (38) which guide the discs (4) in rotation being attached to the said casing (1) by screws (37) passing through it, and that the attachment of the means of suspension (20, 35) is effected by means of at least one of the said screws (37) serving to attach a bearing (38) to the casing (1).

21. A device as in at least one of the clams 10 to 20, characterized by the fact that the means of suspension include in particular a flexible rod (20) of spring steel.

22. A device as in at least one of the Claims 10 to 20, characterized by the fact that the means of suspension consist of a potion of the plate (19) in the form of a handle (35).

23. A device as in Claim 22, characterized by the fact that the section of the handle (35) is substantially round.

24. A device as in at least one of the Claims 10 to 23, characterized by the fact that the plate (19) includes a rib substantially along its longitudinal axis.

25. A device as in Claim 22 and 24 or 23 and 24, characterized by the fact that at least one portion of the rib has a shape which is partially like that of the handle (35).

26. A device as in Claim 25, characterized by the fact that the rib and the handle (35) are joined.

FIG.1

FIG.2

FIG.3

28

FIG.7

28

FIG.4

3

FIG. 5

FIG. 6